# EUROPÄISCHE PATENTSCHRIFT

(11) **EP 2 434 260 B1**
(45) Veröffentlichungstag und Bekanntmachung des Hinweises auf die Patenterteilung: **12.09.2018**
(21) Anmeldenummer: 11161661.1
(22) Anmeldetag: 08.04.2011
(51) Int. Cl.: G01D 5/244, G01D 5/347

(54) **Positionsmesssystem und Verfahren zur Montage**
Position measuring system and assembly method
Système de mesure de position et procédé de montage

(30) Priorität: 05.07.2010 DE 102010030948
(43) Veröffentlichungstag der Anmeldung: 28.03.2012
(73) Patentinhaber: Dr. Johannes Heidenhain GmbH, 83301 Traunreut (DE)
(72) Erfinder: Pucher, Wolfgang, 83278 Traunstein (DE); Kühler, Markus, 83365 Nußdorf (DE)

(56) Entgegenhaltungen:
- EP-A1- 1 526 363
- WO-A1-02/40947
- DE-A1- 3 740 744
- US-A1- 2003 094 568

## Beschreibung

Die Erfindung betrifft ein Positionsmesssystem gemäß dem Oberbegriff des Anspruchs 1, sowie ein Verfahren gemäß dem Oberbegriff des Anspruchs 7.

Ein gattungsbildendes Positionsmesssystem gemäß den Merkmalen des Oberbegriffs des Anspruchs 1 ist in der EP 1 526 363 A1 beschrieben.
Ein weiteres Positionsmesssystem ist in der WO 02/40947 A1 beschrieben. Sie weist einen Träger einer Messteilung auf, der zur Positionsmessung berührungslos von einem Abtastkopf abgetastet wird, Zur Positionsmessung ist es erforderlich, dass der Träger der Messteilung in einer vorgegebenen Lage gegenüber dem Abtastkopf an den zu messenden Maschinenteilen befestigt wird. Hierzu dient eine Montagehilfe, welche den Träger in einer vorgegebenen Montageposition am Abtastkopf fixiert. Um diese Montageposition zu erreichen, wird gemäß der WO 02/40947 A1 vorgeschlagen, die Lage des Abtastkopfes zum Träger der Messteilung in einem separaten Vorgang zu justieren, bevor der Abtastkopf an dem Träger lagefixiert wird.
Die US 2003/0094568 A1 beschreibt ein ähnliches Positionsmesssystem.

Es wird eine immer höhere Messgenauigkeit gefordert. Diese Messgenauigkeit wird beeinflusst von der Zuordnung von Abtastkopf und Messteilung. Es hat sich gezeigt, dass es mit dem bekannten Positionsmesssystem nur schwer möglich ist, eine zur präzisen Positionsmessung erforderliche Zuordnung zwischen dem Abtastkopf und dem Träger der Messteilung zu erreichen. Die zweistufige Verfahrensweise Justierung und Lagefixierung erlaubt nur umständlich, eine exakte Zuordnung in der geforderten Montageposition.

Der Erfindung liegt daher die Aufgabe zugrunde, ein Positionsmesssystem der eingangs genannten Art zu schaffen, mit der eine präzise Positionsmessung ermöglicht wird.

Diese Aufgabe wird durch das Positionsmesssystem mit den Merkmalen des Patentanspruchs 1 gelöst.

Weiterhin liegt der Erfindung die Aufgabe zugrunde, ein Verfahren anzugeben, um ein Positionsmesssystem besonders einfach in der geforderten Montageposition an die zu messenden Maschinenteile zu montieren, um eine hohe Messgenauigkeit des Positionsmesssystems zu erhalten.

Die Aufgabe wird durch ein Verfahren mit den Merkmalen des Patentanspruchs 7 gelöst.

Vorteilhafte Ausgestaltungen der Erfindung sind den abhängigen Ansprüchen zu entnehmen.

Weitere vorteilhafte Merkmale und Vorteile der Erfindung werden in der nachfolgenden Beschreibung von Ausführungsbeispielen anhand der Figuren aufgezeigt.

Es zeigen:
- Figur 1: eine perspektivische Ansicht eines erfindungsgemäß ausgestalteten Positionsmesssystems mit einer Montagehilfe,
- Figur 2: eine Ansicht A des Positionsmesssystems gemäß Figur 1,
- Figur 3: eine Ansicht B des Positionsmesssystems gemäß Figur 1,
- Figur 4: den Abtastkopf und den Träger der Messteilung des Positionsmesssystems gemäß Figur 1,
- Figur 5: das Positionsmesssystem im angebauten Zustand, und
- Figur 6: eine Ansicht des Positionsmesssystems gemäß Figur 1 mit einer abgewandelten Montagehilfe.

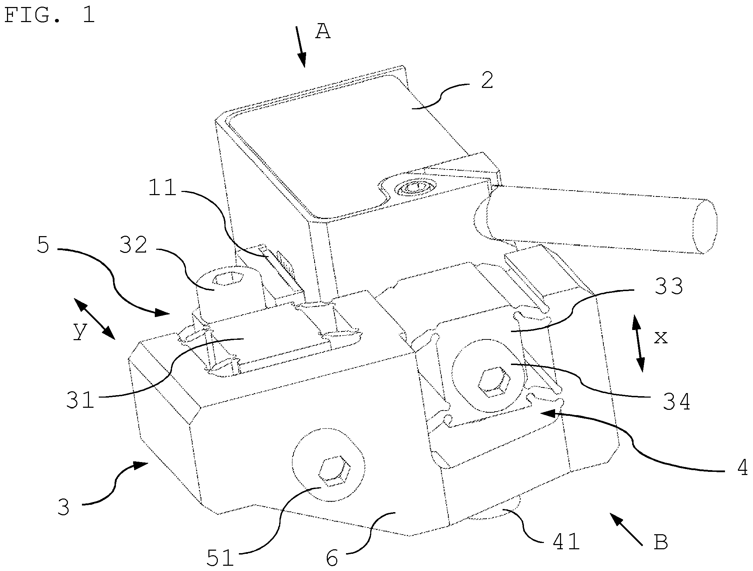

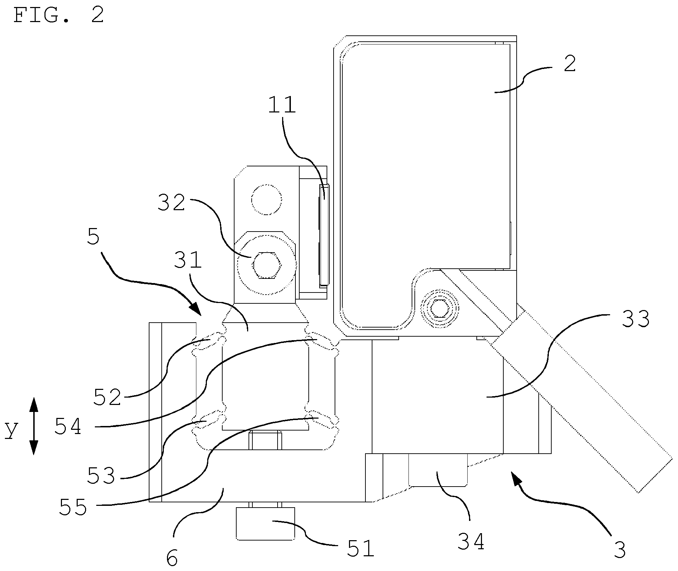

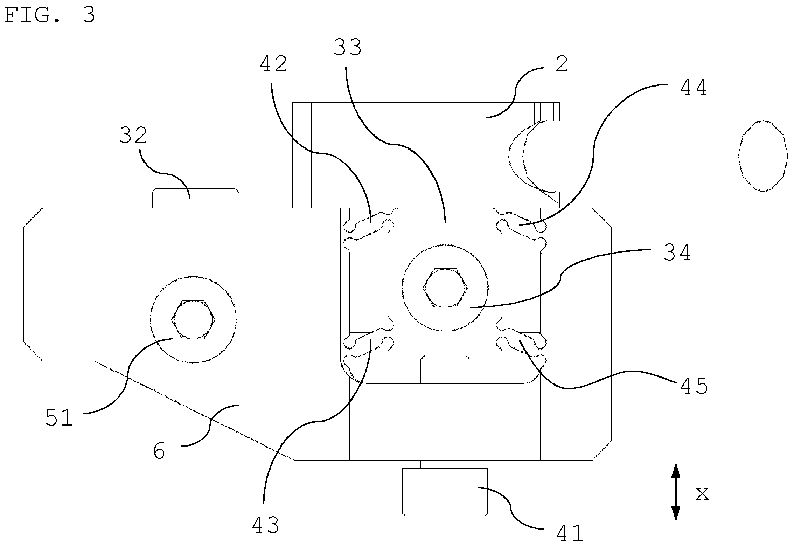

Anhand der Figuren 1 bis 5 wird ein erstes Ausführungsbeispiel der Erfindung näher erläutert. Das beispielhaft gezeigte Positionsmesssystem dient zur Messung eines Winkels zwischen einer Messteilung 1 und einem diese Messteilung 1 abtastenden Abtastkopf 2 in Messrichtung W. Hierzu ist die Messteilung 1 relativ zum Abtastkopf 2 um die Drehachse D in Messrichtung W verschwenkbar.

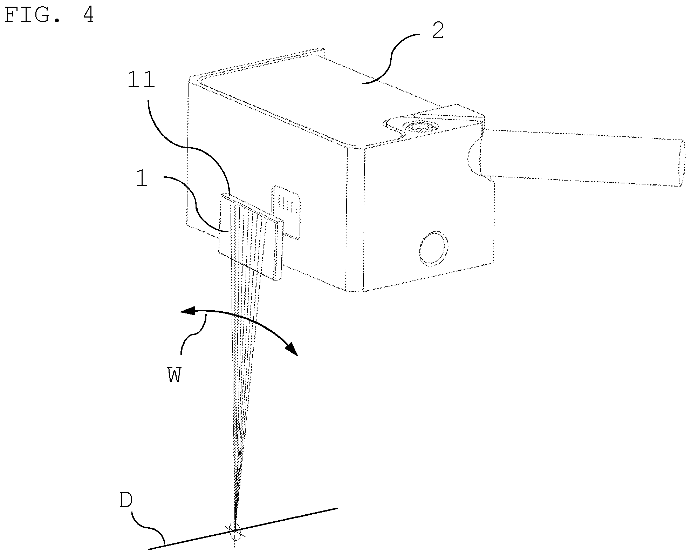

Wie in Figur 4 im Detail dargestellt, ist die von dem Abtastkopf 2 bei der Positionsmessung abgetastete Messteilung 1 radial von der Drehachse D beabstandet und als Radialteilung ausgebildet, die aus einer Folge von Teilstrichen besteht, die vom Abtastkopf 2 berührungslos optisch abtastbar sind. Im gezeigten Beispiel besteht die Messteilung 1 aus einer Folge von reflektierenden und nicht reflektierenden Teilstrichen, wobei der Abtastkopf 2 in bekannter Weise eine Lichtquelle und Detektoren beinhaltet. Das Licht der Lichtquelle wird von der Messteilung 1 positionsabhängig moduliert und gelangt durch Reflexion zu den Detektoren, die mehrere gegeneinander phasenverschobene positionsabhängige elektrische Abtastsignale erzeugen.

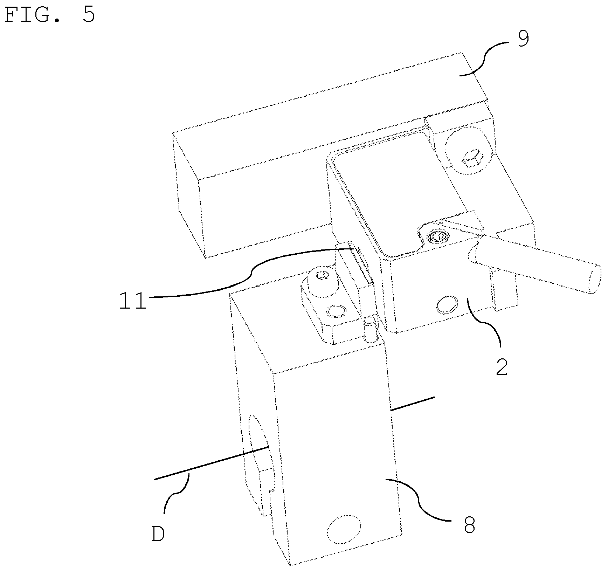

Das Positionsmesssystem ist ein sogenanntes modulares System, bei dem der Abtastkopf 2 nicht von einem Träger 11 der Messteilung 1 in Messrichtung W geführt ist, sondern die Führung erst im angebauten Zustand von den in Figur 5 dargestellten zu messenden Maschinenteilen 8 und 9 realisiert wird. Zur Vereinfachung des Anbaus an die aus Gründen der Übersichtlichkeit nur in Figur 5 dargestellten zu messenden Maschinenteile 8 und 9 ist der Träger 11 der Messteilung 1 dem Abtastkopf 2 in einer Montageposition lagefixiert fest zugeordnet, und zwar derart, dass der Träger 11 der Messteilung 1 mit dem Abtastkopf 2 als gemeinsame Einheit handhabbar ist.

Diese Zuordnung erfolgt durch eine Montagehilfe 3, mit der der Träger 11 der Messteilung 1 am Abtastkopf 2 befestigt wird. Diese Befestigung ist derart ausgestaltet, dass der Träger 11 während der Montage an die zu messenden Maschinenteile 8 und 9 dem Abtastkopf 2 ortsfest zugeordnet ist, aber nach erfolgter Montage vom Träger 11 sowie vom Abtastkopf 2 lösbar ist, so dass die Montagehilfe 3 entfernbar ist. Bei der eigentlichen Positionsmessung ist die Montagehilfe 3 von dem Träger 11 und dem Abtastkopf 2 gelöst und entfernt, wie in Figur 5 dargestellt.

Die Montagehilfe 3 weist einen ersten Abschnitt 31 auf, welcher zur Montage ortsfest und nach erfolgter Montage lösbar an dem Träger 11 der Messteilung 1 fixiert ist. Die Fixierung erfolgt durch eine Schraube 32.

Die Montagehilfe 3 weist weiterhin einen zweiten Abschnitt 33 auf, welcher zur Montage ortsfest und nach erfolgter Montage lösbar an dem Abtastkopf 2 fixiert ist. Auch diese Fixierung erfolgt durch eine Schraube 34.

Die Montagehilfe 3 weist weiterhin zumindest eine Justiervorrichtung 4, 5 zwischen dem ersten Abschnitt 31 und dem zweiten Abschnitt 33 auf, die derart ausgebildet ist, dass die Montageposition zwischen dem Träger 11 der Messteilung 1 relativ zum Abtastkopf 2 in zumindest einem Freiheitsgrad einstellbar ist, wobei dieser einstellbare Freiheitsgrad von der Messrichtung W abweicht. Durch Justierung der Relativlage der Messteilung 1 relativ zum Abtastkopf 2 ist somit eine Optimierung der Zuordnung beider Teile 1, 2 möglich, so dass die Abtastsignale optimale Parameter wie Amplitude und / oder Phasenlage aufweisen. Die Montagehilfe 3 ist hierzu vorzugsweise derart ausgebildet, dass während der Justierung die Messteilung 1 vom Abtastkopf 2 abtastbar ist, so dass die Zuordnung anhand der aktuell generierten Abtastsignale justiert werden kann.

Vorteilhaft ist, wenn die zumindest eine Justiervorrichtung 4, 5 eine lineare Verstellbewegung ermöglicht, insbesondere in radialer Richtung X und / oder in einer Richtung Y, die tangential zur Umfangsrichtung der Messteilung 1, also tangential zu der Messrichtung W verläuft.

Sollte eine Justierung in mehreren Freiheitsgraden X, Y erforderlich sein, dann sind zwischen dem ersten Abschnitt 31 und dem zweiten Abschnitt 33 mehrere Justiervorrichtungen 4, 5 angeordnet. Mit diesen Justiervorrichtungen 4, 5 ist die Montageposition zwischen der Messteilung 1 relativ zum Abtastkopf 2 in mehreren Freiheitsgraden X, Y unabhängig voneinander einstellbar. Hierzu sind die mehreren Justiervorrichtungen 4, 5 seriell hintereinander angeordnet.

Die serielle Anordnung von zwei Justiervorrichtungen 4, 5 ist im dargestellten Beispiel dadurch realisiert, dass ein Grundkörper 6 als Zwischenelement vorgesehen ist, relativ zu dem einerseits der erste Abschnitt 31 in einem Freiheitsgrad Y und andererseits der zweite Abschnitt 33 in einem weiteren Freiheitsgrad X einstellbar ist. Es ist also ausgehend vom Träger 11 der Messteilung 1 der erste Abschnitt 31 der Montagehilfe 3 ortsfest am Träger 11 angeordnet, daran ist die Justiervorrichtung 5 angeordnet, daran wiederum der Grundkörper 6, daran die Justiervorrichtung 4, daran der zweite Abschnitt 33, der am Abtastkopf 2 ortsfest befestigt ist. Durch diese serielle Anordnung ergibt sich die voneinander unabhängige Justagemöglichkeit in den genannten Freiheitsgraden X und Y, wodurch eine optimale Zuordnung der Messteilung 1 zum Abtastkopf 2 möglich ist, in der die Abtastsignale auch im späteren Messbetrieb die gewünschten Parameter aufweisen.

Nachdem die Messteilung 1 anhand der Abtastsignale relativ zum Abtastkopf 2 mittels der Justiervorrichtungen 4 und 5 der Montagehilfe 3 optimal ausgerichtet ist, erfolgt der Anbau des Trägers 11 der Messteilung 1 an das Maschinenteil 8 und des Abtastkopfes 2 an das Maschinenteil 9. Durch diesen Anbau wird die optimal eingestellte Zuordnung zwischen Messteilung 1 und Abtastkopf 2 auf die Maschinenteile 8, 9 übertragen, so dass während des nachfolgenden Messbetriebs eine hochgenaue und präzise Positionsmessung erfolgen kann. Erst nach erfolgtem Anbau an die Maschinenteile 8 und 9 wird die Montagehilfe 3 von dem Träger 11 der Messteilung 1 und dem Abtastkopf 2 gelöst und die Montagehilfe 3 entfernt. Das Entfernen der Montagehilfe 3, in welche die Justiervorrichtungen 4 und 5 integriert sind, hat den großen Vorteil, dass der nachfolgende Messbetrieb nicht gestört wird. Im Messbetrieb sind keine unnötigen Teile an den relativ zueinander bewegten Maschinenteilen 8 und 9 vorhanden, so dass die dynamischen Eigenschaften nicht gestört werden und eine hohe Messgenauigkeit ermöglicht wird.

Nachfolgend wird nun anhand der Figuren 1 bis 3 eine vorteilhafte Ausgestaltung der Justiervorrichtungen 4 und 5 näher erläutert. Jede der Justiervorrichtungen 4 und 5 besteht aus einer Linearführung und einem Verstellelement 41 bzw. 51 zur Einleitung der Verstellung. Als Verstellelement 41, 51 fungiert im dargestellten Beispiel jeweils eine Schraube, vorzugsweise mit Feingewinde.

Die Justiervorrichtung 4 ist zwischen dem Grundkörper 6 und dem zweiten Abschnitt 33 der Montagehilfe 3 angeordnet. Die Linearführung wird durch eine räumliche Anordnung von Lenkern 42 bis 45 gebildet, die den zweiten Abschnitt 33 ausschließlich in dem linearen Freiheitsgrad X an den Grundkörper 6 ankoppelt und in allen anderen Freiheitsgraden eine Relativbewegung zwischen dem Grundkörper 6 und dem zweiten Abschnitt 33 sperrt.

Die räumliche Anordnung der auslenkbaren Lenker 42 bis 45 bildet eine Parallelführung. Hierzu sind die Lenker 42 bis 45 spiegelsymmetrisch zur Auslenkrichtung X angeordnet, wobei auf einer Seite jeweils mindestens zwei der Lenker 42 bis 45 vorgesehen sind. Die bei einer Verstellbewegung in X-Richtung auftretenden Kräfte treten dadurch symmetrisch zur Bewegungsachse X auf.

Die Lenker 42 bis 45 sind vorzugsweise einstückig mit dem Grundkörper 6 und dem zweiten Abschnitt 33 ausgebildet. Dabei weisen die Lenker 42 bis 45 einerseits jeweils an der Anbindungsstelle zum Grundkörper 6 und andererseits jeweils an der Anbindungsstelle zum zweiten Abschnitt 33 ein Festkörpergelenk auf.

Die Justiervorrichtung 5 ist zwischen dem Grundkörper 6 und dem ersten Abschnitt 31 der Montagehilfe 3 angeordnet. Diese Linearführung wird durch eine räumliche Anordnung von Lenkern 52 bis 55 gebildet, die den ersten Abschnitt 31 ausschließlich in dem linearen Freiheitsgrad Y an den Grundkörper 6 ankoppelt und in allen anderen Freiheitsgraden eine Relativbewegung zwischen dem Grundkörper 6 und dem ersten Abschnitt 31 sperrt.

Die räumliche Anordnung der auslenkbaren Lenker 52 bis 55 bildet eine Parallelführung. Hierzu sind die Lenker 52 bis 55 spiegelsymmetrisch zur Auslenkrichtung Y angeordnet, wobei auf einer Seite jeweils mindestens zwei der Lenker 52 bis 55 vorgesehen sind. Die bei einer Verstellbewegung in Y-Richtung auftretenden Kräfte treten dadurch symmetrisch zur Bewegungsachse Y auf.

Die Lenker 52 bis 55 sind vorzugsweise einstückig mit dem Grundkörper 6 und dem ersten Abschnitt 31 ausgebildet. Dabei weisen die Lenker 52 bis 55 einerseits an der Anbindungsstelle zum Grundkörper 6 und andererseits an der Anbindungsstelle zum ersten Abschnitt 31 jeweils ein Festkörpergelenk auf.

Vorzugsweise sind die Lenker 42 bis 45 derart in Bewegungsrichtung X vorgespannt, dass das Verstellelement 41 und der zweite Abschnitt 33 über den gesamten notwendigen Verstellweg in beiden Richtungen +X sowie -X aneinander gedrängt werden.

Diese Vorspannung ist auch in Y-Richtung zwischen dem Verstellelement 52 und dem ersten Abschnitt 31 vorgesehen.

Die Justiervorrichtungen 4, 5 sind derart ausgestaltet, dass sie eine geforderte Verstellbewegung in der Größenordnung eines Bruchteils eines mm ermöglichen.

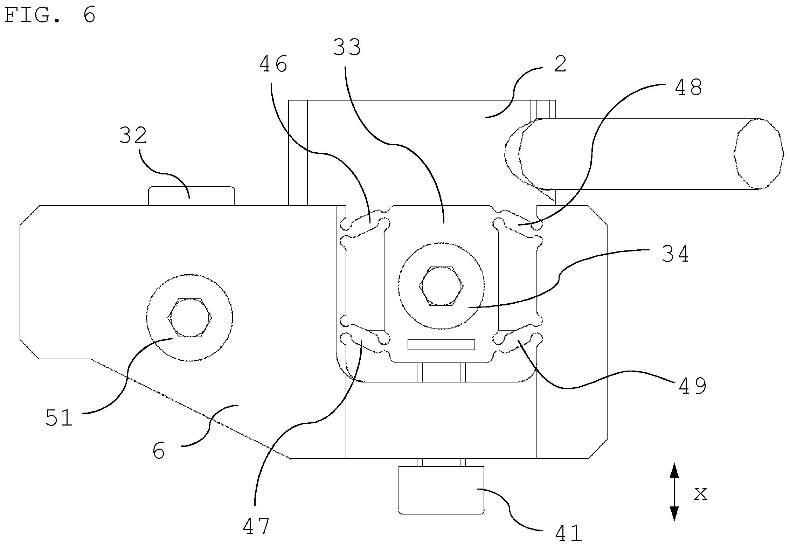

In Figur 6 ist anhand der Justiervorrichtung 4 eine weitere Möglichkeit der Anordnung von Lenkern 46 bis 49 dargestellt. Die jeweils auf einer Seite der Bewegungsrichtung X angeordneten Lenker 46 bis 49 sind hier nicht parallel zueinander angeordnet, sondern winkelig zueinander.

Die Erfindung ist nicht nur bei Positionsmesssystemen zur Messung von Winkeln anwendbar, sondern die Erfindung kann auch bei Linearmesssystemen eingesetzt werden.

## Patentansprüche

1. Positionsmesssystem zur Messung der Relativlage eines ersten Maschinenteils (8) relativ zu einem zweiten Maschinenteil (9) in einer Messrichtung (W), mit
- einem Träger (11) einer Messteilung (1), der am ersten Maschinenteil (8) montierbar ist,
- einem Abtastkopf (2) zur Abtastung der Messteilung (1), der am zweiten Maschinenteil (9) montierbar ist,
- einer Montagehilfe (3), mit der der Träger (11) der Messteilung (1) in einer Montageposition an dem Abtastkopf (2) befestigt ist, so dass der Träger (11) der Messteilung (1) und der Abtastkopf (2) als gemeinsame Einheit handhabbar ist und in dieser Zuordnung an den Maschinenteilen (8, 9) montierbar ist, wobei die Montagehilfe (3)
- einen ersten Abschnitt (31) aufweist, welcher zur Montage ortsfest und nach erfolgter Montage lösbar an dem Träger (11) der Messteilung (1) fixiert ist und
- einen zweiten Abschnitt (33) aufweist, welcher zur Montage ortsfest und nach erfolgter Montage lösbar an dem Abtastkopf (2) fixiert ist, **gekennzeichnet dadurch, dass**
- die Montagehilfe (3)zumindest eine Justiervorrichtung (4, 5) zwischen dem ersten Abschnitt (31) und dem zweiten Abschnitt (33) aufweist, die derart ausgebildet ist dass die Montageposition zwischen dem Träger (11 der Messteilung (1) relativ zum Abtastkopf (2) in zumindest einem linearen Freiheitsgrad (X, Y) einstellbar ist, der von der Messrichtung (W) abweicht, und dass die zumindest eine Justiervorrichtung (4, 5) eine Anordnung von mehreren auslenkbaren Lenkern (42 bis 45, 52 bis 55, 46 bis 49) und ein Verstellelement (41, 51) aufweist.

2. Positionsmesssystem nach Anspruch 1, **dadurch gekennzeichnet, dass** die Lenker (42 bis 45, 52 bis 55, 46 bis 49) spiegelsymmetrisch zur Richtung der linearen Verstellbewegung (X, Y) angeordnet sind, wobei mindestens vier Lenker (42 bis 45, 52 bis 55, 46 bis 49) vorgesehen sind.

3. Positionsmesssystem nach einem der vorhergehenden Ansprüche, **dadurch gekennzeichnet, dass** zwischen dem ersten Abschnitt (31) und dem zweiten Abschnitt (33) mehrere Justiervorrichtungen (4, 5) vorgesehen sind, so dass die Montageposition zwischen dem Träger (11) der Messteilung (1) relativ zum Abtastkopf (2) in mehreren Freiheitsgraden (X, Y) unabhängig voneinander einstellbar ist.

4. Positionsmesssystem nach Anspruch 3, **dadurch gekennzeichnet, dass** eine der Justiervorrichtungen (5) zwischen dem ersten Abschnitt (31) und einem Grundkörper (6) der Montagehilfe (3) angeordnet ist, die zur Einstellung in einem Freiheitsgrad (Y) ausgebildet ist, und dass zwischen dem Grundkörper (6) der Montagehilfe (3) und dem zweiten Abschnitt (33) eine weitere der Justiervorrichtungen (4) angeordnet ist, die zur Einstellung in einem zweiten Freiheitsgrad (X) ausgebildet ist.

5. Positionsmesssystem nach Anspruch 4, **dadurch gekennzeichnet, dass** mit der einen der Justiervorrichtungen (5) der erste Abschnitt (31) in einem ersten linearen Freiheitsgrad (Y) einstellbar mit dem Grundkörper (6) verbünden ist, und dass mit der weiteren der Justiervorrichtungen (4) der zweite Abschnitt (33) in einem weiteren linearen Freiheitsgrad (X) einstellbar mit dem Grundkörper (6) verbunden ist.

6. Positionsmesssystem nach einem der vorhergehenden Ansprüche 3 bis 5. **dadurch gekennzeichnet, dass** die Messteilung (1) eine Radialteilung zur Positionsmessung um eine Drehachse (D) in einer rotatorischen Messrichtung (W) ist, und dass mit einer der Justiervorrichtungen (4) eine lineare Verstellbewegung (X) in radialer Richtung ermöglicht ist, und dass mit der anderen der Justiervorrichtungen (5) eine lineare Verstellbewegung (Y) tangential zur Messrichtung (W) ermöglicht ist.

7. Verfahren zur Montage eines Trägers (11) einer Messteilung (1) und eines Abtastkopfes (2) eines Positionsmesssystems an zwei Maschinenteile (8, 9), deren Relativiage in einer Messrichtung (W) zu messen ist, wobei bei der Montage der Träger (11) der Messteilung (1) dem Abtastkopf (2) in einer Montageposition zugeordnet ist, **gekennzeichnet durch** folgende Verfahrensschritte:
- ortsfeste Befestigung des Trägers (11) der Messteilung (1) an einem ersten Abschnitt (31) einer Montagehilfe (3) und ortsfeste Befestigung des Abtastkopfes (2) an einem zweiten Abschnitt (33) der Montagehilfe (3),
- Einstellen einer Montageposition durch Verstellen der Lage des ersten Abschnitts (31) relativ zum zweiten Abschnitt (33) in zumindest einem linearen Freiheitsgrad (X, Y), der von der Messrichtung (W) abweicht, mittels zumindest einer in der Montagehilfe (3) integrierten Justiervorrichtung (4, 5), die eine Anordnung von mehreren auslenkbaren Lenkern (42 bis 45, 52 bis 55, 46 bis 49) und ein Verstellelement (41, 51) aufweist,
- ortsfeste Befestigung des Trägers (11) der Messteilung (1) an einem der Maschinenteile (8) und ortsfeste Befestigung des Abtastkopfes (2) an dem anderen Maschinenteil (9) in der eingestellten Montageposition,
- Entfernen der Montagehilfe (3) durch Lösen der Befestigung des Trägers (11) der Messteilung (1) vom ersten Abschnitt (31) der Montagehilfe (3) und Lösen der Befestigung des Abtastkopfes (8) vom zweiten Abschnitt (33) der Montagehilfe (3).

8. Verfahren nach Anspruch 7, **dadurch gekennzeichnet, dass** die Lage des ersten Abschnitts (31) der Montagehilfe (3) relativ zum zweiten Abschnitt (33) der Montagehilfe (3) mittels mehrerer Justiervorrichtungen (4, 5) der Montagehilfe (3) eingestellt wird, wobei die Einstellung mit einer der Justiervorrichtungen (4) in einem ersten Freiheitsgrad (X) und unabhängig davon die Einstellung mit einer weiteren der Justiervorrichtungen (5) in einem zweiten Freiheitsgrad (Y) erfolgt.

## Claims

1. Position measuring system for measuring the relative position of a first machine part (8) relative to a second machine part (9) in a measurement direction (W), having
- a carrier (11) of a measuring scale division (1), which carrier can be mounted on the first machine part (8),
- a scanning head (2) for scanning the measuring scale division (1), which scanning head can be mounted on the second machine part (9),
- a mounting aid (3) by means of which the carrier (11) of the measuring scale division (1) is fastened to the scanning head (2) in a mounting position, such that the carrier (11) of the measuring scale division (1) and the scanning head (2) can be handled as a common unit and can be mounted in this assignment onto the machine parts (8, 9), wherein the mounting aid (3)
- has a first section (31), which, for the mounting, is fixed in a positionally static manner, and after the mounting has been performed, is fixed detachably, to the carrier (11) of the measuring scale division (1), and
- has a second section (33), which, for the mounting, is fixed in a positionally static manner, and after the mounting has been performed, is fixed detachably, to the scanning head (2), **characterized in that**
- the mounting aid (3) has at least one alignment device (4, 5) between the first section (31) and the second section (33), which alignment device is designed such that the mounting position between the carrier (11) of the measuring scale division (1) relative to the scanning head (2) is adjustable in at least one linear degree of freedom (X, Y) which deviates from the measurement direction (W), and that the at least one alignment device (4, 5) has an arrangement of multiple deflectable links (42 to 45, 52 to 55, 46 to 49) and an adjusting element (41, 51).

2. Position measuring system according to Claim 1, **characterized in that** the links (42 to 45, 52 to 55, 46 to 49) are arranged mirror-symmetrically with respect to the direction of the linear adjustment movement (X, Y), wherein at least four links (42 to 45, 52 to 55, 46 to 49) are provided.

3. Position measuring system according to one of the preceding claims, **characterized in that** multiple alignment devices (4, 5) are provided between the first section (31) and the second section (33), such that the mounting position between the carrier (11) of the measuring scale division (1) relative to the scanning head (2) is adjustable in multiple degrees of freedom (X, Y) independently of one another.

4. Position measuring system according to Claim 3, **characterized in that** one of the alignment devices (5) is arranged between the first section (31) and a main body (6) of the mounting aid (3), which alignment device is designed for adjustment in one degree of freedom (Y), and **in that**, between the main body (6) of the mounting aid (3) and the second section (33), there is arranged a further one of the alignment devices (4), which is designed for adjustment in a second degree of freedom (X).

5. Position measuring system according to Claim 4, **characterized in that**, by means of one of the alignment devices (5), the first section (31) is connected, adjustably in a first linear degree of freedom (Y), to the main body (6), and **in that**, by means of the other of the alignment devices (4), the second section (33) is connected, adjustably in a further linear degree of freedom (X), to the main body (6).

6. Position measuring system according to one of the preceding Claims 3 to 5, **characterized in that** the measuring scale division (1) is a radial scale division for position measurement about an axis of rotation (D) in a rotational measurement direction (W), and **in that** a linear adjustment movement (X) in a radial direction is made possible by means of one of the alignment devices (4), and **in that** a linear adjustment movement (Y) tangentially with respect to the measurement direction (W) is made possible by means of the other of the alignment devices (5).

7. Method for mounting a carrier (11) of a measuring scale division (1) and a scanning head (2) of a position measuring system on two machine parts (8, 9), the relative position of which in a measurement direction (W) is to be measured, wherein , during the mounting, the carrier (11) of the measuring scale division (1) is assigned to the scanning head (2) in a mounting position, **characterized by** the following method steps:
- fastening the carrier (11) of the measuring scale division (1) in a positionally static manner on a first section (31) of a mounting aid (3), and fastening the scanning head (2) in a positionally static manner on a second section (33) of the mounting aid (3),
- setting a mounting position by adjusting the position of the first section (31) relative to the second section (33) in at least one linear degree of freedom (X, Y), which deviates from the measurement direction (W), by means of at least one alignment device (4, 5) which is integrated in the mounting aid (3) and which has an arrangement of multiple deflectable links (42 to 45, 52 to 55, 46 to 49) and an adjusting element (41, 51),
- fastening the carrier (11) of the measuring scale division (1) in a positionally static manner on one of the machine parts (8), and fastening the scanning head (2) in a positionally static manner to the other machine part (9) in the set mounting position,
- removing the mounting aid (3) by releasing the fastening of the carrier (11) of the measuring scale division (1) from the first section (31) of the mounting aid (3) and releasing the fastening of the scanning head (8) from the second section (33) of the mounting aid (3).

8. Method according to Claim 7, **characterized in that** the position of the first section (31) of the mounting aid (3) relative to the second section (33) of the mounting aid (3) is set by means of multiple alignment devices (4, 5) of the mounting aid (3), wherein the setting by means of one of the alignment devices (4) is performed in a first degree of freedom (X) and, independently thereof, the setting by means of another of the alignment devices (5) is performed in a second degree of freedom (Y).

## Revendications

1. Système de mesure de position pour la mesure de la position relative d'une première partie de machine (8) par rapport à une deuxième partie de machine (9) dans une direction de mesure (W), avec
- un support (11) d'une graduation de mesure (1), qui peut être monté sur la première partie de machine (8),
- une tête de lecture (2) pour la lecture de la graduation de mesure (1), qui peut être montée sur la deuxième partie de machine (9),
- un accessoire de montage (3), avec lequel le support (11) de la graduation de mesure (1) est fixé dans une position de montage sur la tête de lecture (2), de telle manière que le support (11) de la graduation de mesure (1) et la tête de lecture (2) puissent être manipulés comme une unité commune et être montés dans cet agencement sur les parties de machine (8, 9), dans lequel l'accessoire de montage (3)
- présente une première partie (31), qui est fixée de façon immobile pour le montage et, lorsque le montage est terminé, de façon séparable au support (11) de la graduation de mesure (1), et
- présente une deuxième partie (33), qui est fixée de façon immobile pour le montage et, lorsque le montage est terminé, de façon séparable à la tête de lecture (2),
**caractérisé en ce que**
- l'accessoire de montage (3) présente au moins un dispositif d'ajustage (4, 5) entre la première partie (31) et la deuxième partie (33), qui est configuré de telle manière que la position de montage entre le support (11) de la graduation de mesure (1) par rapport à la tête de lecture (2) soit réglable selon au moins un degré de liberté linéaire (X, Y), qui s'écarte de la direction de mesure (W), et **en ce que** ledit au moins un dispositif d'ajustage (4, 5) présente un agencement de plusieurs bielles pouvant être déviées (42 à 45, 52 à 55, 46 à 49) et un élément de réglage (41, 51).

2. Système de mesure de position selon la revendication 1, **caractérisé en ce que** les bielles (42 à 45, 52 à 55, 46 à 49) sont disposées de façon symétrique par réflexion par rapport à la direction du mouvement de réglage linéaire (X, Y), dans lequel il est prévu au moins quatre bielles (42 à 45, 52 à 55, 46 à 49).

3. Système de mesure de position selon l'une quelconque des revendications précédentes, **caractérisé en ce qu'**il est prévu entre la première partie (31) et la deuxième partie (33) plusieurs dispositifs d'ajustage (4, 5), de telle manière que la position de montage entre le support (11) de la graduation de mesure (1) par rapport à la tête de lecture (2) puisse être réglée selon plusieurs degrés de liberté (X, Y) indépendamment l'un de l'autre.

4. Système de mesure de position selon la revendication 3, **caractérisé en ce qu'**un des dispositifs d'ajustage (5) est disposé entre la première partie (31) et un corps de base (6) de l'accessoire de montage (3), et est conçu pour le réglage selon un degré de liberté (Y), et **en ce qu'**un autre des dispositifs d'ajustage (4) est disposé entre le corps de base (6) de l'accessoire de montage (3) et la deuxième partie (33), et est conçu pour le réglage selon un deuxième degré de liberté (X).

5. Système de mesure de position selon la revendication 4, **caractérisé en ce qu'**avec l'un des dispositifs d'ajustage (5) la première partie (31) est reliée au corps de base (6) de façon réglable selon un premier degré de liberté linéaire (Y) et **en ce qu'**avec l'autre des dispositifs d'ajustage (4) la deuxième partie (33) est reliée au corps de base (6) de façon réglable selon un autre degré de liberté linéaire (X).

6. Système de mesure de position selon l'une quelconque des revendications précédentes 3 à 5, **caractérisé en ce que** la graduation de mesure (1) est une graduation radiale pour la mesure de position autour d'un axe de rotation (D) dans une direction de mesure rotative (W), et **en ce qu'**avec un des dispositifs d'ajustage (4) un mouvement de réglage linéaire (X) est possible en direction radiale, et **en ce qu'**avec l'autre des dispositifs d'ajustage (5) un mouvement de réglage linéaire (Y) est possible tangentiellement à la direction de mesure (W).

7. Procédé de montage d'un support (11) d'une graduation de mesure (1) et d'une tête de lecture (2) d'un système de mesure de position sur deux parties de machine (8, 9), dont la position relative dans une direction de mesure (W) doit être mesurée, dans lequel lors du montage le support (11) de la graduation de mesure (1) est associé à la tête de lecture (2) dans une position de montage, **caractérisé par** les étapes de procédé suivantes:
- fixation immobile du support (11) de la graduation de mesure (1) sur une première partie (31) d'un accessoire de montage (3) et fixation immobile de la tête de lecture (2) sur une deuxième partie (33) de l'accessoire de montage (3),
- réglage d'une position de montage par réglage de la position de la première partie (31) par rapport à la deuxième partie (33) selon au moins un degré de liberté linéaire (X, Y), qui s'écarte de la direction de mesure (W), au moyen d'au moins un dispositif d'ajustage (4, 5) intégré dans l'accessoire de montage (3), qui présente un agencement de plusieurs bielles pouvant être déviées (42 à 45, 52 à 55, 46 à 49) et un élément de réglage (41, 51),
- fixation immobile du support (11) de la graduation de mesure (1) sur une des parties de machine (8) et fixation immobile de la tête de lecture (2) sur l'autre partie de machine (9) dans la position de montage réglée,
- enlèvement de l'accessoire de montage (3) par libération de la fixation du support (11) de la graduation de mesure (1) de la première partie (31) de l'accessoire de montage (3) et libération de la fixation de la tête de lecture (8) de la deuxième partie (33) de l'accessoire de montage (3).

8. Procédé selon la revendication 7, **caractérisé en ce que** l'on règle la position de la première partie (31) de l'accessoire de montage (3) par rapport à la deuxième partie (33) de l'accessoire de montage (3) au moyen de plusieurs dispositifs d'ajustage (4, 5) de l'accessoire de montage (3), dans lequel on effectue le réglage avec un des dispositifs d'ajustage (4) selon un premier degré de liberté (X) et indépendamment de celui-ci on effectue le réglage avec un autre des dispositifs d'ajustage (5) selon un deuxième degré de liberté (Y).
